# EUROPÄISCHE PATENTSCHRIFT

(11) **EP 1 960 702 B1**
(45) Veröffentlichungstag und Bekanntmachung des Hinweises auf die Patenterteilung: **14.07.2010**
(21) Anmeldenummer: 06829268.9
(22) Anmeldetag: 04.12.2006
(51) Int. Cl.: F16H 63/42

(54) **SCHALTPUNKTANZEIGE IN EINEM KRAFTFAHRZEUG MIT HANDSCHALTGETRIEBE**
SHIFTING POINT DISPLAY IN A MOTOR VEHICLE COMPRISING A MANUAL TRANSMISSION
AFFICHAGE DE POINT DE CHANGEMENT DE VITESSE DANS UNE AUTOMOBILE A BOITE DE VITESSES MANUELLE

(30) Priorität: 16.12.2005 DE 102005060130
(43) Veröffentlichungstag der Anmeldung: 27.08.2008
(73) Patentinhaber: Bayerische Motoren Werke Aktiengesellschaft, 80809 München (DE)
(72) Erfinder: KRÄMER, Gerd, 83727 Schliersee (DE); CROCI, Alberto, 80634 München (DE)
(86) Internationale Anmeldenummer: PCT/EP2006/011614
(87) Internationale Veröffentlichungsnummer: WO 2007/073828

(56) Entgegenhaltungen:
- DE-A1- 19 963 156
- US-A- 4 604 700
- US-A- 4 622 637

## Beschreibung

Die Erfindung bezieht sich auf eine Schaltpunktanzeige in einem Kraftfahrzeug mit Handschaltgetriebe zum Anzeigen eines Schalthinweises nach dem Oberbegriff des Patentanspruchs 1 und des Patentanspruchs 2.

Das Dokument US 4622637 A zeigt alle Merkmale des gleichlautenden Oberbegriffs der beiden unabhängigen Patentansprüche 1 und 2.

Im Gegensatz zu Automatikgetrieben, bei denen der Schaltvorgang durch abgelegte Hochschalt- und Rückschaltkennlinien automatisch vorgenommen wird, ist bei Kraftfahrzeugen mit Handschaltgetrieben der Fahrer selbst für das Einlegen der Gänge zuständig. Um dem Fahrer dies zu erleichtern, sind bereits verschiedene Schaltpunktanzeigen bekannt, die dem Fahrer einen Hinweis geben, wann er schalten soll, um beispielsweise besonders verbrauchsorientiert zu fahren.

So ist aus der DE 199 63 156 B4 ein für ein Kraftfahrzeug bestimmtes Anzeigeinstrument mit einem Display bekannt, wobei in Abhängigkeit von der momentanen Fahrpedalstellung oder Fahrmanualstellung zumindest eine in einem elektrischen Speicher abgelegte Motorkennlinien angezeigt wird. Anhand dieser Darstellung soll der Fahrer erkennen, ob er sich mit dem Arbeitspunkt bzw. Betriebspunkt seines Motors in einem optimalen Bereich befindet und wie sich der Arbeitsbereich verändert, wenn er beispielsweise mehr Gas gibt oder den Gang wechselt. Bei einer derartigen Darstellung könnte der Fahrer übermäßig stark vom Fahrgeschehen abgelenkt werden, da er anhand der Darstellung ständig überprüfen muss, ob er das Kraftfahrzeug im optimalen Arbeitsbereich betreibt.

Aus der DE 39 12 359 A1 ist eine Schalthilfe-Informationseinrichtung bekannt, die auf der Basis erfasster Istzustände von Motordrehzahl, Fahrgeschwindigkeit, eingelegtem Gang, Fahrpedalstellung und auf der Basis von Daten der Motorcharakteristik und Getriebecharakteristik Schaltempfehlungen für eine kraftstoffverbrauchsoptimierte und/oder abgasschadstoffminimierte Fahrweise ausgibt. Diese Ermittlung der Schaltempfehlung benötigt hohe Rechenkapazitäten. Ein weiteres Problem ergibt sich, wenn das Fahrzeug derart betrieben wird, dass der berechnete optimale Gang dauernd zwischen dem aktuell eingelegten Gang und einen anderem Gang wechselt. Der Schalthinweis würde dann toggeln, d.h. dauern zwischen aktiv und inaktiv wechseln, was sich auf den Fahrer störend auswirken könnte, oder gar zu Verunsicherung beim Fahrer führen könnte.

Aufgabe der Erfindung ist es, eine verbessere Schaltpunktanzeige anzugeben, welche keine unnötigen Rechenkapazitäten benötigt und den Fahrer nicht verunsichert oder vom Fahrer als störend empfunden wird.

Diese Aufgabe wird durch eine Schaltpunktanzeige nach Patentanspruch 1 oder Patentanspruch 2 gelöst. Vorteilhafte Weiterbildungen sind die Gegenstände der abhängigen Ansprüche.

Die erste erfindungsgemäße Schaltpunktanzeige in einem Kraftfahrzeug mit Handschaltgetriebe zum Anzeigen eines Schalthinweises und mit einer Steuereinheit zum kontinuierlichen Ermitteln eines aktuellen Betriebspunktes des Kraftfahrzeugs zeichnet sich dadurch aus, dass in einem elektronischen Speicher zumindest eine Hochschalthinweiskennlinie gespeichert ist und bei Erreichen der Hochschalthinweiskennlinie durch den aktuellen Betriebspunkt und einem niedrigeren aktuell eingelegten Gang ein Hochschalthinweis angezeigt wird, wobei der Hochschalthinweis so lange angezeigt wird, bis der Fahrer einen Hochschaltvorgang vorgenommen hat oder bis der aktuellen Betriebspunkt eine zur Hochschalthinweiskennlinie reduzierte Hochschalthinweis-Hysteresekennlinie erreicht und/oder unterschritten hat.

Die zweite erfindungsgemäße Schaltpunktanzeige in einem Kraftfahrzeug mit Handschaltgetriebe zum Anzeigen eines Schalthinweises und mit einer Steuereinheit zum kontinuierlichen Ermitteln eines aktuellen Betriebspunktes des Kraftfahrzeugs zeichnet sich dadurch aus, dass in einem elektronischen Speicher zumindest eine Rückschalthinweiskennlinie gespeichert ist und bei Erreichen der Rückschalthinweiskennlinie durch den aktuellen Betriebspunkt und einem höheren aktuell eingelegten Gang ein Rückschalthinweis angezeigt wird, wobei der Rückschalthinweis so lange angezeigt wird, bis der Fahrer einen Rückschaltvorgang vorgenommen hat oder bis der aktuelle Betriebspunkt eine zur Rückschalthinweiskennlinie erhöhte Rückschalthinweis-Hysteresekennlinie erreicht und/oder überschritten hat.

Die beiden erfindungsgemäßen Schaltpunktanzeigen basieren somit auf der Basis von Hochschalt- bzw. Rückschaltkennlinien, wie sie in Kraftfahrzeugen mit Automatikgetrieben gespeichert und für den automatischen Schaltvorgang herangezogen werden. Im Unterschied zu den Hochschalt- bzw. Rückschaltkennlinien, die in den Kraftfahrzeugen mit Automatikgetriebe abgelegt sind, sind die Hochschalthinweis- bzw. Rückschalthinweiskennlinien bei der Erfindung zu den oben genannten Hochschalt- bzw. Rückschaltkennlinien derart verschoben, dass der Fahrer, wenn er den Schalthinweis erhält noch genügend Zeit hat, den Schaltvorgang zum optimalen Zeitpunkt vorzunehmen. Dieser Zeitraum wird bei der Festlegung der Hochschalthinweis- bzw. Rückschalthinweiskennlinien berücksichtigt.

Durch die Ausgabe des Schalthinweises bei Erreichen der Hochschalthinweis- oder Rückschalthinweiskennlinie werden nur sehr geringe Rechenkapazitäten benötigt, da lediglich ein Vergleich der Schalthinweiskennlinien mit dem aktuellen Betriebspunkt des Kraftfahrzeugs vorgenommen werden muss.

Ein weiterer Vorteil der erfindungsgemäßen Anzeigevorrichtungen besteht in der Darstellung bzw. der Dauer der Darstellung des jeweiligen Schalthinweises. Da der Schalthinweis erst dann wieder zurückgenommen wird, wenn der Fahrer entweder den entsprechenden Schaltvorgang vorgenommen hat oder wenn der aktuelle Betriebspunkt des Kraftfahrzeugs die vorgegebene, und zur Hochschalthinweiskennlinie reduzierte Hochschalthinweis-Hysteresekennlinie unterschritten hat bzw. der Betriebspunkt des Kraftfahrzeugs die vorgegebene, und zur Rückschalthinweiskennlinie erhöhte Rückschalthinweis-Hysteresekennlinie überschritten hat, wird ein Toggeln der Anzeige ausgeschlossen. Der Abstand zwischen der Hochschalthinweiskennlinie und der Hochschalthinweis-Hysteresekennlinie bzw. zwischen der Rückschalthinweiskennlinie und der Rückschalthinweis-Hysteresekennlinie sollte einen derartigen Abstand haben, dass das Toggeln einerseits ausgeschlossen werden kann, wenn das Fahrzeug in etwa in einem Betriebspunkt betrieben wird, und andererseits die Anzeige nicht mehr aktiv ist, wenn ein Schaltvorgang entsprechend der Anzeige nicht mehr sinnvoll oder möglich ist. Eine vorteilhafte Ausgestaltung der Erfindung ergibt sich durch eine Kombination der Merkmale gemäß Anspruch 1 und Anspruch 2.

Der Hochschalthinweis und/oder Rückschalthinweis kann eine optische Anzeige, vorzugsweise eine den Zielgang wiedergebende Anzeige im Instrumentenkombi des Kraftfahrzeugs oder in einem separaten Display im Kraftfahrzeug sein.

Vorteilhafterweise sind in dem elektronischen Speicher für alle Gänge die relevante Hochschalthinweiskennlinie und die dazugehörige Hochschalthinweis-Hysteresekennlinie und/oder die relevante Rückschalthinweiskennlinie und die dazugehörige Rückschalthinweis-Hysteresekennlinie gespeichert. Dies bedeutet, dass für den niedrigsten Gang keine Rückschalthinweiskennlinie und dazugehörige Rückschalthinweis-Hysteresekennlinie und für den größten Gang keine Hochschalthinweiskennlinie und dazugehörige Hochschalthinweis-Hysteresekennlinie im Speicher abgelegt sind. Für die dazwischen liegenden Gänge sollte jedoch eine Hochschalthinweiskennlinie, eine dazugehörige Hochschalthinweis-Hysteresekennlinie, eine Rückschalthinweiskennlinie und eine dazugehörige Rückschalthinweis-Hysteresekennlinie gespeichert sein. Somit kann an den Fahrer über den gesamten Betriebsbereich des Kraftfahrzeugs ein Schalthinweis ausgegeben werden, wenn er notwendig ist.

Vorteilhafterweise wird der aktuelle Betriebspunkt in Abhängigkeit von der Abtriebsdrehzahl oder der Geschwindigkeit und dem Fahrpedalwinkel ermittelt und die Hochschalthinweiskennlinien und/oder Rückschalthinweiskennlinie, sowie die dazugehörigen Hochschalthinweis-Hysteresekennlinien und/oder Rückschalthinweis-Hysteresekennlinien in Abhängigkeit von der Abtriebsdrehzahl bzw. der Geschwindigkeit und dem Fahrpedalwinkel gespeichert. Somit kann anhand der aktuellen Abtriebsdrehzahl bzw. der Geschwindigkeit und der aktuellen Fahrpedalstellung ermittelt werden, ob eine vorgegebene Schalthinweiskennlinie erreicht und ein Schalthinweis ausgegeben werden soll, oder ob - falls der Schalthinweis bereits aktiv ist und der Fahrer keinen entsprechenden Schaltvorgang vorgenommen hat - die zur Schalthinweiskennlinie dazugehörige Hysteresekennlinie erreicht bzw. unter- oder überschritten ist.

Der Schaltpunkthinweis kann entweder sequentiell, also nur um einen Gang nach oben oder nach unten, oder über mehrere Gänge, also über mehrere, vom aktuellen Gang abweichende Gänge angezeigt werden. Ist beispielsweise aktuell der 2. Gang eingelegt, kann bei hoher Drehzahl auch ein Schalthinweis in den 6. Gang angezeigt werden. Der angezeigte maximale Gangsprung kann in Richtung Hochschaltung und Rückschaltung betrennt begrenzt werden. Die Anzahl der Schaltvorgänge kann somit deutlich reduziert werden. Ein Rückschalthinweis um mehr als einen Gang ist jedoch nicht sinnvoll.

Vorteilhafterweise wird bei mehreren gespeicherten Hochschalthinweiskennlinien ein derartiger Hochschalthinweis angezeigt, der der maximal erreichten Hochschalthinweiskennlinie durch den Betriebspunkt zugeordnet ist oder bei mehreren gespeicherten Rückschalthinweiskennlinien ein Rückschalthinweis angezeigt wird, der der maximal erreichten Rückschalthinweiskennlinie durch den Betriebspunkt zugeordnet ist. Somit kann die Schaltpunktanzeige auch einen Schalthinweis auf einen einzulegenden Gang ausgeben, der nicht unmittelbar über oder unter dem aktuellen Gang liegt.

Vorteilhafterweise wird die Ermittlung des Hochschalthinweises und/oder des Rückschalthinweises nicht vorgenommen, wenn vorgegebene Bedingungen nicht erfüllt sind. Dies beutet, dass die Schaltpunktanzeigebestimmung nur unter bestimmten Vorraussetzungen vorgenommen wird. Bei den Voraussetzungen kann es sich beispielsweise um einen bestimmten Geschwindigkeitsbereich, der nicht über- oder unterschritten sein darf, oder um einen vorgegebenen Drehzahlgradienten, der nicht überschritten sein darf, handeln. Als weitere Bedingung darf das Kraftfahrzeug nicht im Rückwärtsgang betrieben werden und auch die Bremse nicht getreten sein.

Sind die genannten Voraussetzungen erfüllt und wird im Rahmen der erfindungsgemäßen Schaltpunktanzeigen ein Schalthinweis ermittelt, der angezeigt werden soll, wird vorteilhafterweise der Hochschalthinweis und/oder der Rückschalthinweis jedoch unterdrückt, wenn sich das Kraftfahrzeug in einer Kurve befindet oder wenn sich das Kraftfahrzeug im Bergabbetrieb befindet. Der Bergabbetrieb kann mittels einer Fahrwiderstandserkennung ermittelt werden. Schließlich wird der Schalthinweis erst ausgegeben, wenn ein Kraftschluss zwischen der Antriebseinheit und dem Getriebe vorliegt.

Vorteilhafterweise wird der Hochschalthinweis unterdrückt, wenn eine Bremsbetätigung im Kraftfahrzeug vorliegt. Der Rückschalthinweis wird jedoch bei betätigter Bremse ausgegeben.

Bei den gespeicherten Kennlinien handelt es vorteilhafterweise um verbrauchsoptimale Kennlinien, d .h. die Kennlinien sind im Hinblick auf den Verbrauch festgelegt. Beachtet der Fahrer die Schalthinweise, kann er das Kraftfahrzeug äußerst verbrauchsgünstig betreiben.

In der Zeichnung ist ein Ausführungsbeispiel der Erfindung dargestellt. Dabei zeigt die
- Fig. 1: eine vereinfachte Darstellung der erfindungsgemäßen Schaltpunktan- zeige,
- Fig. 2: gespeicherte Hoch- und Rückschalthinweiskennlinien eines Kraftfahr- zeugs mit Handschaltgetriebe mit 6 Vorwärts-Getriebestufen, und
- Fig. 3: eine Darstellung, anhand derer der Ablauf der erfindungsgemäßen Schaltpunktanzeigen zum Anzeigen eines Schalthinweise gezeigt wird.

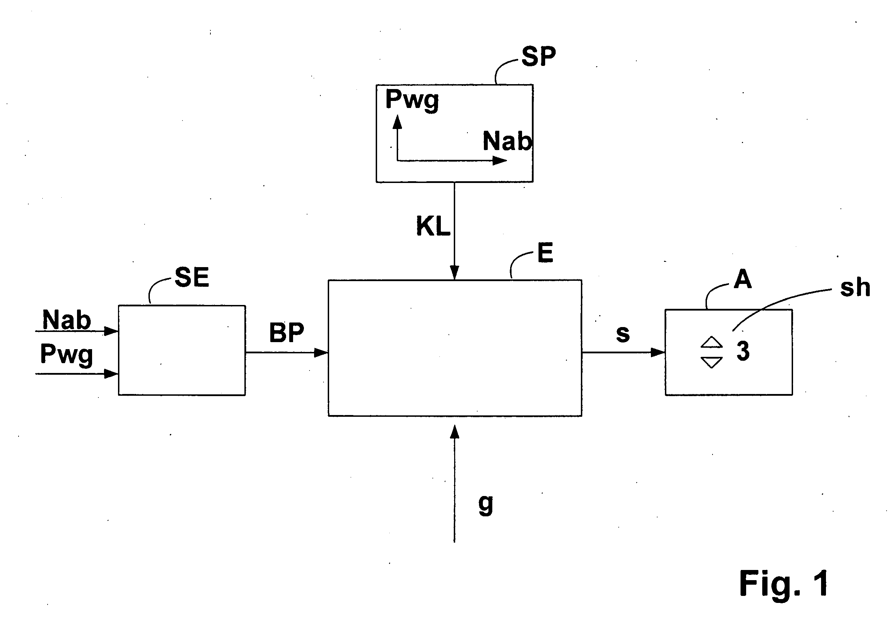

In der Figur 1 ist eine Schaltpunktanzeige eines mit einem Handschaltgetriebe ausgestatteten Kraftfahrzeugs zum Anzeigen eines Schalthinweises sh dargestellt. In einer Steuereinheit SE wird kontinuierlich in Abhängigkeit von der aktuellen Abtriebsdrehzahl Nab bzw. von der aktuellen Geschwindigkeit des Kraftfahrzeugs und vom Fahrpedalwinkel Pwg der aktuelle Betriebspunkt BP des Kraftfahrzeugs ermittelt. Der kontinuierlich ermittelte Betriebspunkt BP wird einer Ermittlungseinheit E, welche ein Signal s zum Ausgeben des Schalthinweises sh ermittelt, zugeführt.

In einem Speicher SP sind mehrere Schalthinweiskennlinien KL in Abhängigkeit von der Abtriebsdrehzahl Nab und der Pedalstellung Pwg gespeichert. Diese Schalthinweiskennlinien KL werden ebenfalls der Ermittlungseinheit E zugeführt. Zusätzlich erhält die Ermittlungseinheit E noch ein Signal g, welches den aktuell eingelegten Gang wiedergibt.

In der Ermittlungseinheit E wird in Abhängigkeit von den Eingangssignalen BP, g und KL das Signal s erzeugt, und der Anzeigeeinheit A zugeführt. Die Anzeigeeinheit A gibt in Abhängigkeit von diesem Signal s den ermittelten Schalthinweis sh aus. Dieser besteht in der vorliegenden Ausführung aus einer Zahl, die dem einzulegenden Gang entspricht, und einem nach oben oder unten gerichteten Dreieck. Je nachdem, ob es sich um einen Hochschalthinweis oder einen Rückschalthinweis handelt, ist das nach oben oder unten gerichtete Dreieck aktiv und beleuchtet.

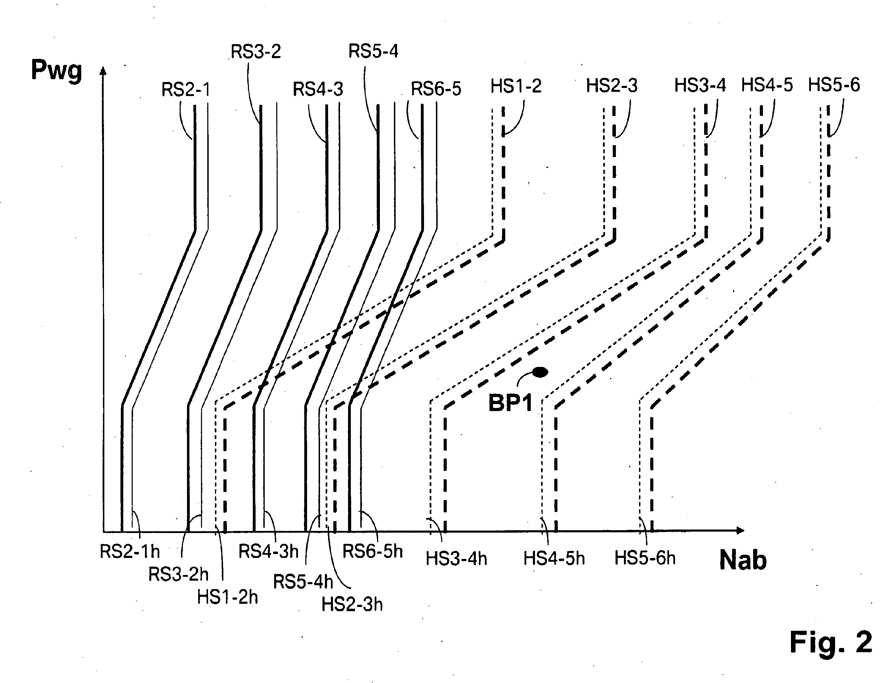

Fig. 2 zeigt eine vereinfachte Darstellung gespeicherter Hochschalthinweiskennlinien HS1-2, HS2-3, HS3-4, HS4-5 und HS5-6, Hochschalthinweis-Hysteresekennlinien HS1-2h, HS2-3h, HS3-4h, HS4-5h und HS5-6h, Rückschalthinweiskennlinien RS2-1, RS3-2, RS4-3, RS5-4 und RS6-5, und Rückschalthinweis-Hysteresekennlinien RS2-1 h, RS3-2h, RS4-3h, RS5-4h und RS6-5h, für ein Kraftfahrzeug mit einem manuellen 6-Gang-Schaltgetriebe. Die Kennlinien sind in Abhängigkeit von der Abtriebsdrehzahl Nab und der Pedalstellung Pwg aufgetragen.

Aus der Fig. 2 ist ersichtlich, dass jeder Hochschalthinweiskennlinie HS1-2, HS2-3, HS3-4, HS4-5 und HS5-6 eine nach links verschobene Hochschalthinweis-Hysteresekennlinie HS1-2h, HS2-3h, HS3-4h, HS4-5h und HS5-6h zugeordnet ist. Im Unterschied dazu sind die zu den Rückschalthinweiskennlinien RS2-1, RS3-2, RS4-3, RS5-4 und RS6-5 dazugehörigen Rückschalthinweis-Hysteresekennlinien RS2-1h, RS3-2h, RS4-3h, RS5-4h und RS6-5h nach rechts verschoben.

Zusätzlich ist noch ein aktuell ermittelter Betriebspunkt BP1 des Kraftfahrzeugs in die Darstellung eingetragen. Anhand der vorliegenden Darstellung ist erkennbar, dass der zu diesem Betriebspunkt BP1 erforderliche Gang der 4. Gang ist. Ist dieser Gang bereits eingelegt, erfolgt keine Anzeige. Ist dieser Gang jedoch nicht eingelegt, würde gemäß der Schaltpunktanzeige nach Fig. 1 - falls ein niedrigerer Gang eingelegt ist - die Zahl 4 und das nach oben gerichtete Dreieck ausgegeben werden. Ist ein höherer Gang eingelegt, wird kein Rückschalthinweis ausgegeben, da keine Rückschalthinweiskennlinie unterschritten ist.

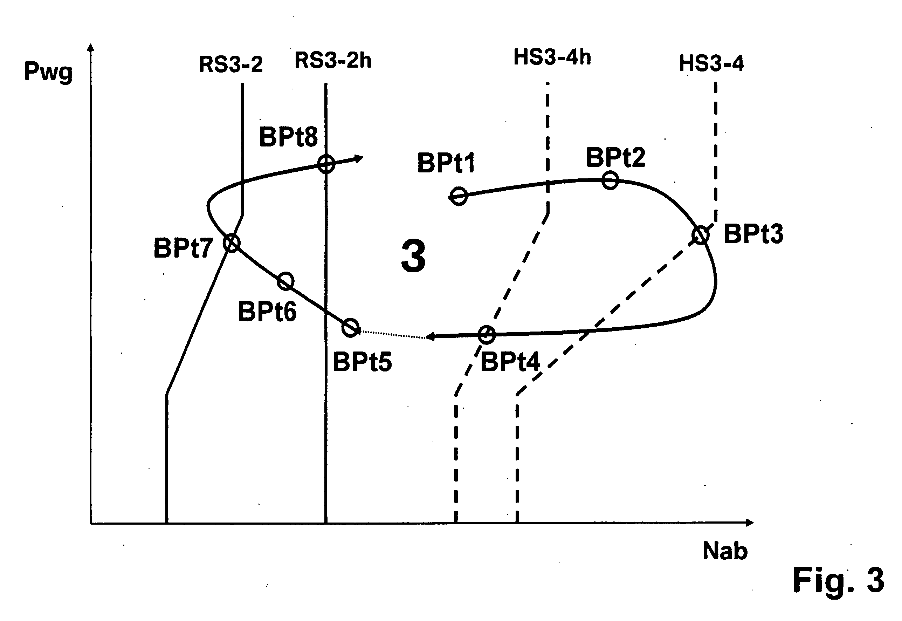

Anhand der Fig. 3 soll der im Rahmen der erfindungsgemäßen Schaltpunktanzeige durchgeführte Ablauf zum Anzeigen eines Schalthinweises aufgezeigt werden.

In der Fig. 3 sind dazu die Hochschalthinweiskennlinie HS3-4, bei deren Erreichen ein Hochschalthinweis in den 4. Gang erzeugt werden soll, die dazugehörige Hochschalthinweis-Hysteresekennlinie HS3-4h, die Rückschaltkennlinie RS3-2, bei deren Erreichen ein Rückschalthinweis in den 2. Gang erzeugt werden soll, und die dazugehörige Rückschalthinweis-Hysteresekennlinie RS3-2h dargestellt. Zusätzlich sind verschiedene aktuelle Betriebspunkte BPt1 bis BPt8 dargestellt, die das Kraftfahrzeug zu verschiedenen Zeitpunkten einnimmt. Zum aktuellen Zeitpunkt befindet sich das Kraftfahrzeug im Betriebspunkt BPt1 und es ist immer der 3. Gang eingelegt, was durch die Zahl 3 in der Fig. 3 verdeutlicht werden soll.

Es wird davon ausgegangen, dass alle vorgegebenen Bedingungen, die zu einer sinnvollen Anzeige führen, erfüllt sind. Beispielsweise kann keine sinnvolle Anzeige ermittelt werden, wenn sich das Kraftfahrzeug in einer unklaren fahrdynamischen Lage befindet, wenn bspw. ein Momenteneingriff vorgenommen wird, oder der Fahrerwunsch nicht erkennbar ist, da das Fahrpedal nicht getreten ist.. Auch im Rückwärtsgang oder bei getretener Bremse wird kein Hochschalt- oder Rückschalthinweis erzeugt bzw. ausgegeben.

Bei der Schaltpunktanzeige wird nun in einem ersten Schritt ermittelt, welcher Gang dem optimalen Gang entspricht und wo der aktuelle Betriebspunkt innerhalb des in Fig. 3 dargestellten Kennlinienfeldes positioniert ist. Dazu werden die Eingangssignale zur Bestimmung des aktuellen Betriebspunktes des Kraftfahrzeugs ausgewertet. Anhand der Position des aktuellen Betriebspunktes innerhalb des in Fig. 3 dargestellten Kennlinienfeldes wird ein möglicher Schalthinweis oder die Zurücknahme eines Schalthinweises ermittelt. Die Funktion zum Ermitteln des Schalthinweises läuft somit parallel zur Gangwahl des Fahrers.

Wird nun beispielsweise der Betriebspunkt BPt1 als aktueller Betriebspunkt ermittelt, wird anhand der Positionierung des Betriebspunktes BPt1 innerhalb des dargestellten Kennlinienfeldes festgestellt, dass der optimale Gang der 3. Gang ist, da die am höchsten angeordnete und überschrittene Hochschalthinweiskennlinie die (hier nicht dargestellte) Hochschalthinweiskennlinie HS2-3 vom 2. in den 3. Gang ist. Durch Vergleich des somit ermittelten optimalen Gangs mit dem aktuell eingelegten Gang, der in dieses Beispiel ebenfalls der 3. Gang ist, wird festgestellt, dass der eingelegte Gang bereits der optimale Gang ist und somit kein Schalthinweis ausgegeben werden muss.

Wird als aktueller Betriebspunkt der Betriebspunkt BPt2 ermittelt, wird wieder als optimaler Gang der 3 Gang ermittelt und dementsprechend durch Vergleich mit dem aktuell eingelegten Gang kein Schalthinweis ausgegeben. Wird als aktueller Betriebspunkt der Betriebspunkt BPt3 ermittelt, erkennt das System, dass die Hochschalthinweiskennlinie HS3-4 erreicht ist und möglicherweise ein Hochschalthinweis ausgegeben werden muss, falls der aktuelle Gang kleiner als der 4. Gang ist. Durch Vergleich wird festgestellt, dass der eingelegte Gang kleiner ist, als der 4. Gang. Somit wird im Betriebspunkt BPt3 ein Hochschalthinweis ausgegeben.

Wird als aktueller Betriebspunkt der Betriebspunkt BPt4 ermittelt, erkennt das System, dass die Hochschalthinweis-Hysteresekennlinie HS3-4h erreicht ist und somit der Hochschalthinweis wieder deaktiviert werden muss, falls das Fahrzeug im 3. Gang betrieben wird, was wiederum durch Vergleich festgestellt wird. Im vorliegenden Beispiel wird somit der Hochschalthinweis zurückgenommen.

Als nächstes wird als aktueller Betriebspunkt der Betriebspunkt BPt5, und somit als optimaler Gang wieder der 3. Gang ermittelt. Entsprechend den Betriebspunkten BPt1 und BPt2 erfolgt auch hier kein Schalthinweis. Im Betriebspunkt BPt6 gilt das gleiche wie im Betriebspunkt BPt5, da weder die Hochschalthinweiskennlinie HS3-4, noch die Rückschalthinweiskennlinie RS3-2 über bzw. unterschritten ist.

Erst im Betriebspunkt BPt7 wird festgestellt dass die Rückschalthinweiskennlinie RS3-2 erreicht ist und deswegen ein Rückschalthinweis ausgegeben werden muss, falls ein höherer Gang als der 2. Gang eingelegt ist. Durch Vergleich des ermittelten optimalen Gangs und des aktuell eingelegten Gangs wird ein Rückschalthinweis ausgegeben, da der aktuell eingelegte Gang höher ist, als der 2. Gang.

Im Betriebspunkt BPt8 wird festgestellt, dass die Rückschalthinweis-Hysteresekennlinie RS3-2h erreicht ist. Da der Rückschalthinweis noch aktiv ist, also ausgegeben wird, und der aktuelle Gang der 3. Gang ist, wird der Rückschalthinweis wieder deaktiviert.

Neben den genannten Voraussetzungen, die vorliegen müssen, damit ein Schalthinweis überhaupt generiert wird, könnten auch noch Einschränkungen in der Ausgabe eines ermittelten Schalthinweises vorliegen. So kann es unter bestimmten Voraussetzungen beispielsweise vorkommen, dass zwar ein Schalthinweis ermittelt wird, dieser aber nicht ausgegeben wird.

Ein Schalthinweis könnte beispielsweise unterdrückt werden, wenn bei einem Hochschaltvorgang entsprechend dem ermittelten Gang die maximal mögliche Anschlussdrehzahl oder das maximal mögliche Radmoment überschritten wäre.

Auch bei einer Bergauffahrt oder Bergabfahrt müssen die Schalthinweise an die geänderten Fahrwiderstände angepasst werden. Zu diesem Zweck wird zunächst der erhöhte Fahrwiderstand ermittelt. Dies geschieht durch einen Vergleich des aktuellen Antriebsmoments mit einem mittleren Antriebsmoment in der Ebene ohne erhöhte Fahrwiderstände. Um auch im Beschleunigungsfall hier eine sichere Aussage machen zu können, wird das aktuelle Antriebsmoment um die dynamischen Momente für Beschleunigung und Verzögerung vermindert. Wird ein erhöhter Fahrwiderstand erkannt, kann davon abhängig die Ganganzeige begrenzt werden. Dabei sollte berücksichtigt werden, dass auch bergauf eine Konstantfahrt mit leichtem Überschussmoment mit dem maximal angezeigten Gang noch möglich ist. Es besteht die Möglichkeit, die Begrenzung physikalisch oder mittels einer Kennlinie anzugeben. Bei Bergabfahrt sollte vorzugsweise aber einer bestimmten Steigung kein Hochschalthinweis ausgegeben werden, da das Kraftfahrzeug sonst eventuell selbsttätig schneller werden könnte.

## Patentansprüche

1. Schaltpunktanzeige in einem Kraftfahrzeug mit Handschaltgetriebe zum Anzeigen eines Schalthinweises (sh) und mit einer Steuereinheit (SE) zum kontinuierlichen Ermitteln eines aktuellen Betriebspunktes (BP, BP1, BPt1, BPt2, BPt3, BPt4, BPt5, BPt6, BPt7, BPt8) des Kraftfahrzeugs, wobei in einem elektronischen Speicher (SP) zumindest eine Hochschalthinweiskennlinie (HS3-4) gespeichert ist und bei Erreichen der Hochschalthinweiskennlinie (HS3-4) durch den aktuellen Betriebspunkt (BPt3) ein Hochschalthinweis (sh) angezeigt wird, **dadurch gekennzeichnet, dass** der Hochschalthinweis (sh) so lange angezeigt wird, bis der Fahrer einen Hochschaltvorgang vorgenommen hat oder bis der aktuellen Betriebspunkt (BPt4) eine zur Hochschalthinweiskennlinie (HS3-4) reduzierte Hochschalthinweis-Hysteresekennlinie (HS3-4h) erreicht und/oder unterschritten hat.

2. Schaltpunktanzeige in einem Kraftfahrzeug mit Handschaltgetriebe zum Anzeigen eines Schalthinweises (sh) und mit einer Steuereinheit (SE) zum kontinuierlichen Ermitteln eines aktuellen Betriebspunktes (BP, BP1, BPt1, BPt2, BPt3, BPt4, BPt5, BPt6, BPt7, BPt8) des Kraftfahrzeugs, wobei in einem elektronischen Speicher (SP) zumindest eine Rückschalthinweiskennlinie (RS3-2) gespeichert ist und bei Erreichen der Rückschalthinweiskennlinie (RS3-2) durch den aktuellen Betriebspunkt (BPt7) ein Rückschalthinweis (sh) angezeigt wird, **dadurch gekennzeichnet, dass** der Rückschalthinweis (sh) so lange angezeigt wird, bis der Fahrer einen Rückschaltvorgang vorgenommen hat oder bis der aktuelle Betriebspunkt (BPt8) eine zur Rückschalthinweiskennlinie (RS3-2) erhöhte Rückschalthinweis-Hysteresekennlinie (RS3-2h) erreicht und/oder überschritten hat.

3. Schaltpunktanzeige, **gekennzeichnet durch** die Merkmalskombination der Ansprüche 1 und 2.

4. Schaltpunktanzeige nach einem der vorangegangenen Ansprüchen, **dadurch gekennzeichnet, dass** in dem elektronischen Speicher (SP) für mehrere Gänge eine Hochschalthinweiskennlinie (HS1-2, HS2-3, HS3-4, HS4-5, HS5-6) und eine dazugehörige Hochschalthinweis-Hysteresekennlinien (HS1-2h, HS2-3h, HS3-4h, HS4-5h, HS5-6h) und/oder eine Rückschalthinweiskennlinien (RS2-1, RS3-2, RS4-3, RS5-4, RS6-5) und eine dazugehörige Rückschalthinweis-Hysteresekennlinien (RS2-1 h, RS3-2h, RS4-3h, RS5-4h, RS6-5h) gespeichert ist.

5. Schaltpunktanzeige nach einem der vorangegangenen Ansprüche, **dadurch gekennzeichnet, dass** der aktuelle Betriebspunkt (BP, BP1, BPt1, BPt2, BPt3, BPt4, BPt5, BPt6, BPt7, BPt8) in Abhängigkeit von der Abtriebsdrehzahl (Nab) oder der Geschwindigkeit, und einem Lastsignal, vorzugsweise einem den Fahrpedalwinkel entsprechenden Signal (Pwg) ermittelt wird.

6. Schaltpunktanzeige nach einem der vorangegangenen Ansprüche, **dadurch gekennzeichnet, dass** die Hochschalthinweiskennlinie (HS1-2, HS2-3, HS3-4, HS4-5, HS5-6) und/oder die Rückschalthinweiskennlinie (RS2-1, RS3-2, RS4-3, RS5-4, RS6-5) in Abhängigkeit von der Abtriebsdrehzahl (Nab) oder der Geschwindigkeit, und einem Lastsignal, vorzugsweise einem den Fahrpedalwinkel entsprechenden Signal (Pwg) gespeichert ist.

7. Schaltpunktanzeige nach einem der vorangegangenen Ansprüche, **dadurch gekennzeichnet, dass** der Hochschalthinweis (sh) nur bis zu einer vorgebbare Gangdifferenz zwischen aktuellem Gang (3) und dem aus dem aktuellen Betriebspunkt ermittelten optimalen Gang angezeigt wird, wobei die Gangdifferenz minimal eins ist.

8. Schaltpunktanzeige nach einem der vorangegangenen Ansprüche, **dadurch gekennzeichnet, dass** bei mehreren gespeicherten Hochschalthinweiskennlinien (HS1-2, HS2-3, HS3-4, HS4-5, HS5-6) ein Hochschalthinweis (sh) angezeigt wird, der der maximal erreichten Hochschalthinweiskennlinie (HS1-2, HS2-3, HS3-4, HS4-5, HS5-6) zugeordnet ist oder dass bei mehreren gespeicherten Rückschalthinweiskennlinien (RS2-1, RS3-2, RS4-3, RS5-4, RS6-5) ein Rückschalthinweis (sh) angezeigt wird, der der maximal erreichten Rückschalthinweiskennlinie (RS2-1, RS3-2, RS4-3, RS5-4, RS6-5) zugeordnet ist.

9. Schaltpunktanzeige nach einem der vorangegangenen Ansprüche, **dadurch gekennzeichnet, dass** der Hochschalthinweis (sh) und/oder Rückschalthinweis (sh) unterdrückt wird, wenn sich das Kraftfahrzeug im Bergabbetrieb oder in einer Kurve befindet oder wenn kein Kraftschluss zwischen der Antriebseinheit und dem Getriebe gegeben ist oder wenn ein Rückwärtsgang eingelegt ist.

10. Schaltpunktanzeige nach Anspruch 1 oder einem der Ansprüche 3 bis 9, **dadurch gekennzeichnet, dass** der Hochschalthinweis (sh) unterdrückt wird, wenn eine Bremse des Kraftfahrzeugs betätig wird.

11. Schaltpunktanzeige nach einem der vorangegangenen Ansprüche, **dadurch gekennzeichnet, dass** die Hochschalthinweiskennlinie (HS1-2, HS2-3, HS3-4, HS4-5, HS5-6) und/oder Rückschalthinweiskennlinie (RS2-1, RS3-2, RS4-3, RS5-4, RS6-5) eine verbrauchsoptimale Hochschalthinweiskennlinie und/oder Rückschalthinweiskennlinie ist.

## Claims

1. A shifting point display in a motor vehicle with a manual transmission for displaying a shifting indication (sh) and with a control unit (SE) for continuously determining a current operating point (BP, BP1, BPt1, BPt2, BPt3, BPt4, BPt5, BPt6, BPt7, BPt8) of the motor vehicle, wherein at least one characteristic upshift indication curve (HS3-4) is stored in an electronic memory (SP) and on reaching the characteristic upshift indication curve (HS3-4) an upshift indication (sh) is displayed by the current operating point (BPt3), **characterised in that** the upshift indication (sh) is displayed until the driver has carried out an upshift operation or until the current operating point (BPt4) has reached and/or fallen below a reduced characteristic upshift indication hysteresis curve (HS3-4h) with respect to the characteristic upshift indication curve (HS3-4).

2. A shifting point display in a motor vehicle with a manual transmission for displaying a shifting indication (sh) and with a control unit (SE) for continuously determining a current operating point (BP, BP1, BPt1, BPt2, BPt3, BPt4, BPt5, BPt6, BPt7, BPt8) of the motor vehicle, wherein at least one characteristic downshift indication curve (RS3-2) is stored in an electronic memory (SP) and on reaching the characteristic downshift indication curve (RS3-2) a downshift indication (sh) is displayed by the current operating point (BPt7), **characterised in that** the downshift indication (sh) is displayed until the driver has carried out a downshift operation or until the current operating point (BPt8) has reached and/or fallen below a characteristic downshift indication hysteresis curve (RS3-2h) that is greater than the characteristic downshift indication curve (RS3-2).

3. A shifting point display, **characterised by** the feature combination of claims 1 and 2.

4. A shifting point display according to any one of the preceding claims, **characterised in that** a characteristic upshift indication curve (HS1-2, HS2-3, HS3-4, HS4-5, HS5-6) and an associated characteristic upshift indication hysteresis curve (HS1-2h, HS2-3h, HS3-4h, HS4-5h, HS5-6h) and/or a characteristic downshift indication curve (RS2-1, RS3-2, RS4-3, RS5-4, RS6-5) and an associated characteristic downshift indication hysteresis curve (RS2-1 h, RS3-2h, RS4-3h, RS5-4h, RS6-5h) are stored in an electronic memory (SP) for a plurality of gears.

5. A shifting point display according to any one of the preceding claims, **characterised in that** the current operating point (BP, BP1, BPt1, BPt2, BPt3, BPt4, BPt5, BPt6, BPt7, BPt8) is determined as a function of the output speed (Nab) or the speed and a load signal, preferably a signal (Pwg) corresponding to the accelerator pedal angle.

6. A shifting point display according to any one of the preceding claims, **characterised in that** the characteristic upshift indication curve (HS1-2, HS2-3, HS3-4, HS4-5, HS5-6) and/or the characteristic downshift indication curve (RS2-1, RS3-2, RS4-3, RS5-4, RS6-5) is stored as a function of the output speed (Nab) or the speed and a load signal, preferably a signal (Pwg) corresponding to the accelerator pedal angle.

7. A shifting point display according to any one of the preceding claims, **characterised in that** the upshift indication (sh) is only displayed up to a predeterminable gear difference between the current gear (3) and the optimal gear determined from the current operating point, the gear difference being, at a minimum, one

8. A shifting point display according to any one of the preceding claims, **characterised in that** with a plurality of stored characteristic upshift indication curves (HS1-2, HS2-3, HS3-4, HS4-5, HS5-6), an upshift indication (sh) is displayed, which is associated with the maximum reached characteristic upshift indication curve (HS1-2, HS2-3, HS3-4, HS4-5, HS5-6) or **in that**, with a plurality of stored characteristic downshift indication curves (RS2-1, RS3-2, RS4-3, RS5-4, RS6-5) a downshift indication (sh) is displayed, which is associated with the maximum reached characteristic downshift indication curve (RS2-1, RS3-2, RS4-3, RS5-4, RS6-5).

9. A shifting point display according to any one of the preceding claims, **characterised in that** the upshift indication (sh) and/or downshift indication (sh) is suppressed if the motor vehicle is in downhill operation or is cornering or if there is no frictional connection between the drive unit and the transmission or if a reverse gear is engaged.

10. A shifting point display according to claim 1 or any one of claims 3 to 9, **characterised in that** the upshift indication (sh) is suppressed if a brake of the motor vehicle is actuated.

11. A shifting point display according to any one of the preceding claims, **characterised in that** the characteristic upshift indication curve (HS1-2, HS2-3, HS3-4, HS4-5, HS5-6) and/or characteristic downshift indication curve (RS2-1, RS3-2, RS4-3, RS5-4, RS6-5) is an optimal consumption characteristic upshift indication curve and/or characteristic downshift indication curve.

## Revendications

1. Moyen d'affichage de point de changement de vitesse d'un véhicule automobile équipé d'une boîte de vitesses manuelle pour afficher une indication de commutation (sh) et d'une unité de commande (SE) pour déterminer en continu le point de fonctionnement actuel (BP, BP1, BPt1, BPt2, BPt3, BPt4, BPt5, BPt6, BPt7, BPt8), selon lequel une mémoire électronique (SP) contient au moins l'enregistrement d'une courbe caractéristique d'indication de montée de rapport (HS3-4) et lorsqu'on atteint la courbe caractéristique d'indication de montée de rapport (HS3-4), ou le point de fonctionnement actuel (BPt3), il y a affichage d'une indication de montée de rapport (sh),
**caractérisé en ce que**
l'indication de montée de rapport (sh) est affichée jusqu'à ce que le conducteur exécute un passage de rapport dans le sens montant ou jusqu'à ce que le point de fonctionnement actuel (BPt4) atteint et/ou passe en dessous d'une courbe caractéristique d'hystérésis d'indication de montée de rapport, réduite (HS3-4h), par rapport à la courbe caractéristique d'indication de montée de rapport (HS3-4).

2. Affichage de point de changement de vitesse d'un véhicule automobile équipé d'une boîte de vitesses manuelle pour afficher une indication de commutation (sh) et d'une unité de commande (SE) pour déterminer en continu le point de fonctionnement actuel (BP, BP1, BPt1, BPt2, BPt3, BPt4, BPt5, BPt6, BPt7, BPt8) du véhicule, selon lequel une mémoire électronique (SP) contient l'enregistrement d'au moins une courbe caractéristique d'indication de descente de rapport (RS3-2) et lorsque le point de fonctionnement actuel (BPt7) atteint la courbe caractéristique d'indication de descente de rapport (RS3-2), il y a affichage d'une indication de descente de rapport (sh),
**caractérisé en ce que**
l'indication de descente de rapport (sh) est affichée jusqu'à ce que le conducteur exécute une descente de rapport ou jusqu'à ce que le point de fonctionnement actuel (BPt8) atteint et/ou dépasse une courbe caractéristique d'hystérésis d'indication de rapport (RS3-2h) augmentée par rapport à la courbe caractéristique d'indication de descente de rapport (RS3-2).

3. Moyen d'affichage de point de changement de vitesse,
**caractérisé par**
la combinaison des caractéristiques des revendications 1 et 2.

4. Moyen d'affichage de point de changement de vitesse selon l'une des revendications précédentes,
**caractérisé en ce que**
la mémoire électronique (SP) contient l'enregistrement pour plusieurs rapports de vitesses, une courbe caractéristique d'indication de montée de rapport (HS1-2, HS2-3, HS3-4, HS4-5, HS5-6) et des courbes caractéristiques d'hystérésis d'indication de montée de rapport correspondantes (HS1-2h, HS2-3h, HS3-4h, HS4-5h, HS5-6h) et/ou une courbe caractéristique d'indication de descente de rapport (RS2-1, RS3-2, RS4-3, RS5-4, RS6-5) et une courbe caractéristique d'hystérésis d'indication de descente de rapport correspondante (RS2-1h, RS3-2h, RS4-3h, RS5-4h, RS6-5h).

5. Moyen d'affichage de point de changement de vitesse selon l'une des revendications précédentes,
**caractérisé en ce que**
le point de fonctionnement actuel (BP, BP1, BPt1, BPt2, BPt3, BPt4, BPt5, BPt6, BPt7, BPt8) se détermine en fonction de la vitesse de rotation de sortie (Nab) ou de la vitesse et d'un signal de charge, de préférence d'un signal (Pwg) correspondant à l'angle de la pédale d'accélérateur.

6. Moyen d'affichage de point de changement de vitesse selon l'une des revendications précédentes,
**caractérisé en ce que**
la courbe caractéristique d'indication de montée de rapport (HS1-2, HS2-3, HS3-4, HS4-5, HS5-6) et/ou la courbe caractéristique d'indication de descente de rapport ((RS2-1, RS3-2, RS4-3, RS5-4, RS6-5), est enregistrée en fonction de la vitesse de rotation de sortie (Nab) ou de la vitesse et d'un signal de charge de préférence d'un signal (Pwg) correspondant à l'angle de la pédale d'accélérateur.

7. Moyen d'affichage de point de changement de vitesse selon l'une des revendications précédentes,
**caractérisé en ce que**
l'indication de montée de rapport (sh) n'est affichée que jusqu'à une différence prédéfinie de rapport entre le rapport actuel (3) et le rapport optimum déterminé à partir du point de fonctionnement actuel, la différence des rapports étant diminuée d'une unité.

8. Moyen d'affichage de point de changement de vitesse selon l'une des revendications précédentes,
**caractérisé en ce que**
pour plusieurs courbes caractéristiques d'indication de montée de vitesse, mémorisées (HS1-2, HS2-3, HS3-4, HS4-5, HS5-6), une indication de montée de rapport (sh) est affichée et elle est associée à la courbe caractéristique d'indication de montée de rapport maximale atteinte (HS1-2, HS2-3, HS3-4, HS4-5, HS5-6), ou
pour plusieurs courbes caractéristiques d'indication de descente de rapport, mémorisées (RS2-1, RS3-2, RS4-3, RS5-4, RS6-5), une indication de descente de rapport (sh) est affichée et cette indication est associée à la courbe caractéristique d'indication de descente de rapport maximale atteinte (RS2-1, RS3-2, RS4-3, RS5-4, RS6-5).

9. Moyen d'affichage de point de changement de vitesse selon l'une des revendications précédentes,
**caractérisé en ce que**
l'indication de montée de rapport (sh) et/ou l'indication de descente de rapport (sh), est neutralisée si le véhicule est en montée ou dans une courbe ou si il n'y a pas de liaison de force entre l'unité d'entraînement et la boîte de vitesses ou si le rapport de marche arrière est mis.

10. Moyen d'affichage de point de changement de vitesse selon la revendication 1, ou l'une des revendications 3 à 9,
**caractérisé en ce que**
l'indication de montée de rapport (sh) est neutralisée si le frein du véhicule est actionné.

11. Moyen d'affichage de point de changement de vitesse selon l'une des revendications précédentes,
**caractérisé en ce que**
la courbe caractéristique d'indication de montée de rapport (HS1-2, HS2-3, HS3-4, HS4-5, HS5-6) et/ou la courbe caractéristique d'indication de descente de rapport (RS2-1, RS3-2, RS4-3, RS5-4, RS6-5) est une courbe caractéristique d'indication de montée de rapport et/ou une courbe caractéristique d'indication de descente de rapport optimisée du point de vue de la consommation.
